# EUROPÄISCHE PATENTANMELDUNG

(11) **EP 1 251 381 A2**
(43) Veröffentlichungstag der Anmeldung: **23.10.2002**
(21) Anmeldenummer: 02007619.6
(22) Anmeldetag: 04.04.2002
(51) Int. Cl.: G02B 7/04

(54) **Stellelement, insbesondere als Teil eines Stellantriebs für ein Bildererfassungssystem**

(30) Priorität: 20.04.2001 DE 10119290
(71) Anmelder: Conti Temic Microelectronic GmbH, 90411 Nürnberg (DE)
(72) Erfinder: Bärenweiler, Josef, 90513 Zirndorf (DE); Fendt, Günter, 86529 Schrobenhausen (DE); Riedel, Helmut, Dr., 82256 Fürstenfeldbruck (DE)
(74) Vertreter: Kolb, Georg

(57) **Zusammenfassung**

1. Stellelement, insbesondere als Teil eines Stellantriebs für ein Bilderfassungssystem
**2.1.** Bekannte Stellantriebe geben während des Einstellvorgangs Geräusche von sich, was beispielsweise von Fahrzeuginsassen als störend empfunden wird, insbesondere deshalb, weil Einstellvorgänge in der Regel kurz vor oder beim Belegen eines Sitzes, also bei einem vergleichsweise niedrigem Geräuschniveau noch vor dem Starten des Motors und vor Fahrbeginn, vorgenommen werden.
**2.2.** Stellelement, insbesondere als Teil eines Stellantriebs für ein Bilderfassungssystem einer Bildaufnahmeeinrichtung, wobei sich die Einstellung des Bilderfassungssystems auf ein Objekt verändern lässt, wobei das Stellelement aus einem ersten Aktorteil und einem zweiten Aktorteil besteht, beide Aktorteile einzeln beheizbar sind und die Auslenkung der Aktorteile beim Beheizen entgegen gesetzt gerichtet ist. Als Aktorteile werden Memory-Elemente, Thermobimetall-Teile oder eine Kombination hieraus vorgeschlagen.
**2.3.** Die Erfindung eignet sich insbesondere als Teil eines Stellantriebs für die Schärfe- oder Bildausschnittseinstellung eines Bilderfassungssystems einer Bildaufnahmeeinrichtung, die in Fahrzeugen beispielsweise zur Sitzbelegungserkennung eingesetzt wird.

## Beschreibung

Die Erfindung betrifft ein Stellelement, insbesondere als Teil eines Stellantriebs für ein Bilderfassungssystem nach dem Oberbegriff des Patentanspruchs 1, 6, 9 oder 12.

In der Automobilindustrie fordert der Markt zunehmend verbesserte Insassenschutzsysteme, bei denen beispielsweise ein Prallkissen (Airbag) nur dann ausgelöst wird, wenn ein Fahrzeugsitz mit einer Person ab einer bestimmten Größe und ab einem bestimmten Gewicht besetzt ist und der Insasse eine korrekte Sitzposition einnimmt. Zudem wird gefordert, den Füllgrad eines Prallkissens (Airbag) von der Größe und vom Gewicht des Fahrzeuginsassen oder auch von der Schwere eines Aufpralls abhängig zu machen. Weiterhin darf ein Prallkissen (Airbag) nicht auslösen, wenn zum Beispiel auf dem Beifahrersitz ein Kindersitz mit einem Kleinkind darin befestigt ist, da dadurch das Leben des Kindes bedroht sein kann.

Mit herkömmlichen Systemen kann die Belegung eines Fahrzeugsitzes nicht eindeutig erkannt werden; beispielsweise kann eine Sitzmatte nicht eindeutig zwischen einer leichten Person und einem Kind in einem Kindersitz unterscheiden, obwohl dieser Unterschied für die Auslösung von Insassenschutzsystemen relevant sein kann. Daher werden zur Sitzbelegungserkennung mehr und mehr Bildaufnahmeeinrichtungen mit nachgeschalteten Bildverarbeitungssystemen verwendet (wie beispielsweise in DE 197 57 595 A1 beschrieben), verstärkt auch Stereosysteme. Die dabei verwendeten Bildaufnahmeeinrichtungen müssen allerdings sehr exakt scharf- und beispielsweise auf einen Fahrzeuginsassen eingestellt sein, wofür ein Stellantrieb notwendig ist.

Ein Stellantrieb für ein Bilderfassungssystem nach dem Stand der Technik ist beispielsweise aus der europäischen Patentschrift EP 0 485 302 B1 bekannt. Bei dem in dieser Schrift genannten Stellantrieb wird ein Getriebe zur Ausschnittsveränderung (Zoom) oder zur Scharfeinstellung durch einen elektrischen Motor, insbesondere durch einen Schrittmotor angetrieben.

Derartige Stellantriebe weisen jedoch den Nachteil auf, dass sie während des Einstellvorgangs Geräusche von sich geben, was innerhalb eines Fahrzeugs von den Insassen als störend empfunden wird, insbesondere deshalb, weil derartige Einstellvorgänge in der Regel kurz vor oder beim Belegen eines Sitzes, also bei einem vergleichsweise niedrigem Geräuschniveau noch vor dem Starten des Motors und vor Fahrtbeginn, vorgenommen werden.

Formgedächtnislegierungen, sogenannte Memorymetalle oder Memory-Elemente, sind bekannt und werden, wie beispielsweise in der DE 39 18 499 A1 gezeigt, in Verbindung mit Sicherheitsventilen eingesetzt, um ein Absperrelement von einer elastischen Schlauchleitungen wegzuziehen und damit den Durchfluss von Gasen oder Flüssigkeiten durch die Schlauchverbindung freizugeben.

Ebenfalls bekannt sind Thermobimetalle, deren nicht fixiertes Ende sich beim Beheizen auslenkt und die beispielsweise in Leistungsschutzschaltern als thermische Auslöser eingesetzt werden, wie dies in der deutschen Offenlegungsschrift DE 43 00 909 A1 beschrieben ist. Weitere Eigenschaften und Besonderheiten von Thermobimetallen und Memory-Elementen sind in dem Artikel "Vergleich der Eigenschaften von Thermobimetallen und Memory-Elementen" der Zeitschrift METALL, Internationale Zeitschrift für Technik und Wirtschaft, Heft 1, 41. Jahrgang 1987, Seite 26 ff, beschrieben.

Der Erfindung liegt die Aufgabe zugrunde, ein Stellelement, insbesondere als Teil eines Stellantriebs, nach dem Oberbegriff des Patentanspruchs 1, 6, 9 oder 12 so zu gestalten, dass keine störenden Geräusche vom Stellantrieb ausgehen.

Gelöst wird diese Aufgabe durch eine Anordnung mit den im Patentanspruch 1, 6, 9 oder 12 angegebenen Merkmalen.

Der Gegenstand des Anspruchs 1, 6, 9 oder 12 weist die Vorteile auf, dass bei Schärfe- oder Ausschnittseinstellungen keine störenden und irritierenden Geräusche auftreten. Aufgrund der Temperatur-Ausbiegungs-Charakteristik des Thermobimetalls kann eine sehr präzise und feinfühlige Einstellung vorgenommen werden, während aufgrund der Temperatur-Ausbiegungs-Charakteristik des Memorymetalls eine sehr schnelle Einstellung vorgenommen werden kann. Ein weiterer Vorteil liegt darin, dass im Vergleich zu elektrischen Motoren, insbesondere Schrittmotoren und deren Ansteuerelektronik, keine elektromagnetische Störstrahlung erzeugt wird und daher mit Aufwand und Kosten verbundene Abschirmmaßnahmen entfallen können.

Die Erfindung eignet sich insbesondere als Teil eines Stellantriebs für ein Bilderfassungssystem, das als Teil einer Bildaufnahmeeinrichtung in Fahrzeugen beispielsweise zur Sitzbelegungserkennung eingesetzt wird.

Vorteilhafte Ausgestaltungen des Gegenstands nach Anspruch 1, 6, 9 oder 12 sind in den jeweiligen Unteransprüchen angegeben.

Die Erfindung wird nun anhand eines Ausführungsbeispiels unter Zuhilfenahme der Zeichnung erläutert.

### Es zeigen

Fig. 1a: einen ersten erfindungsgemäßen Aktor als Stellelement für einen Stellantrieb in Ausgangsstellung,
Fig. 1b: den Aktor nach Fig. 1a in zwei ausgelenkten Stellungen,
Fig. 1c: einen zweiten erfindungsgemäßen Aktor als Stellelement für einen Stellantrieb in Ausgangsstellung,
Fig. 1d: den Aktor nach Fig. 1c in zwei ausgelenkten Stellungen,
Fig. 1e: einen dritten erfindungsgemäßen Aktor als Stellelement für einen Stellantrieb in Ausgangsstellung,
Fig. 1f: den Aktor gemäß Fig. 1e in zwei ausgelenkten Stellungen und
Fig. 2: ein Anwendungsbeispiel für einen der Aktoren nach den Fig. 1a bis 1f als Teil eines Stellantriebs für ein Bilderfassungssystem.

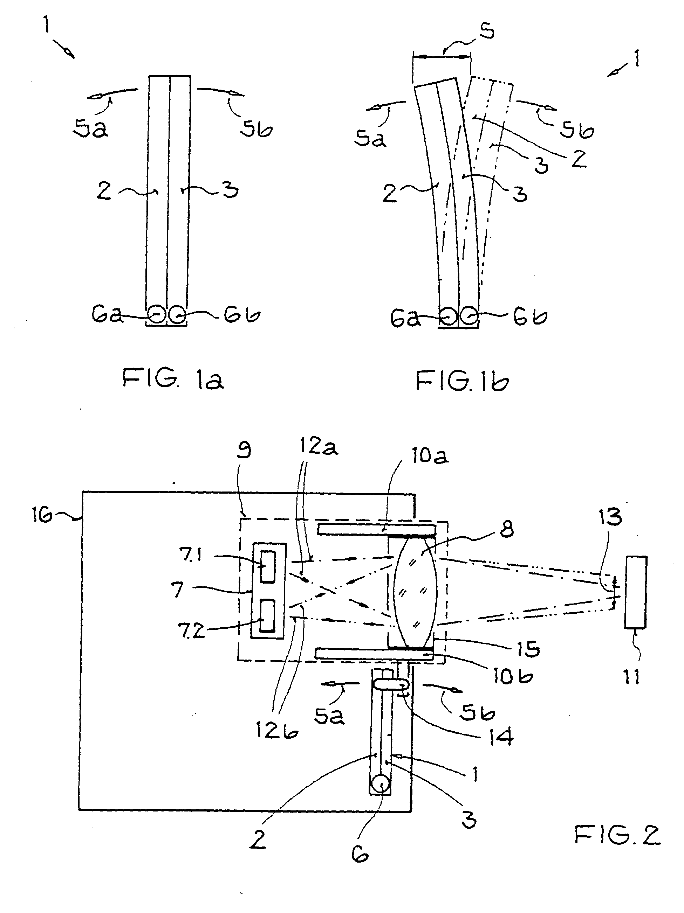

**Fig. 1a** und **Fig. 1b** zeigen einen ersten erfindungsgemäßen Aktor (Stellelement) **1** als Teil eines Stellantriebs. Der Aktor **1** besteht aus einem ersten Aktorteil **2** und einem zweiten Aktorteil **3**. Beide Aktorteile **2** und **3** sind auf geeignete Weise mit einander verbunden. Jedes Aktorteil **2** bzw. **3** ist an einem Ende auf geeignete Art und Weise eingespannt oder fixiert, beispielsweise mittels einer Niet- oder Schraubverbindung **6a** bzw. **6b.** Statt durch zwei Niet- oder Schraubverbindungen **6a** bzw. **6b** können die Aktorteile **2** und **3** auch durch eine einzige Niet- oder Schraubverbindung **6** (Fig. 2) fixiert sein. Jedes Aktorteil **2** bzw. **3** ist einzeln durch ein (nicht dargestelltes) Heizelement beheizbar.

Bei beiden Aktorteilen **2** und **3** handelt es sich vorzugsweise um sogenannte Memorymetalle mit Einwegeffekt, was bedeutet, dass eine nach einer Erwärmung erfolgte Abkühlung keine weitere Formänderung bewirkt. Dies hat den Vorteil, dass die Wärmezufuhr nicht dauerhaft, sondern nur bei einer gewünschten Formänderung erfolgen muss. Dabei können die sogenannten Memory-Elemente entweder aus einer bekannten Nickel-Titan-Kupfer-Legierung zusammen gesetzt sein, wie sie beispielsweise in der deutschen Offenlegungsschrift DE 38 02 919 A1 beschrieben ist, oder aus einer anderen geeigneten Legierung, zum Beispiel einer Nickel-Titan-Legierung.

In manchen Fällen kann es aufgrund bestimmter Anforderungen an die Temperatur-Ausbiegungs-Charakteristik notwendig sein, den Aktor **1** mit den Aktorteilen **2** und **3** anstatt aus den beiden Memory-Elementen aus zwei einzeln beheizbaren Thermobimetall-Teilen aufzubauen. In Folge dessen müsste das jeweils auszulenkende Thermobimetall-Teil ständig beheizt werden, oder der Stellantrieb dahingehend ausgelegt werden, dass eine bestimmte Einstellung erhalten bleibt und nur bei neuer Einstellung beheizt werden muss.

Bei anderen Anwendungsfällen kann es weiterhin vorteilhaft sein, den Aktor **1** mit den Aktorteilen **2** und **3** anstatt aus den zwei Memory-Elementen oder aus zwei Thermobimetall-Teilen aus einem Memory-Element **2** mit Einweg- oder Zweiweg-Effekt und aus einem Thermobimetall-Teil **3** aufzubauen, wobei das Memory-Element **2** und das Thermobimetall-Teil **3** ebenfalls einzeln beheizbar sind. Eine solche Ausgestaltung des Aktors **1** bietet sich an, wenn beispielsweise eine Auslenkung des Aktors **1** in der einen Richtung möglichst schnell und eine Auslenkung in die andere Richtung möglichst genau sein soll. Mit einem derartig aufgebauten Aktor **1** wäre es auch möglich, eine grobe, aber dafür schnelle Auslenkung mittels des Memory-Elements **2** in einer Richtung auszuführen und die (nicht so schnelle) Feineinstellung mit dem Thermobimetall-Teil **3** vorzunehmen.

Bei Erwärmung auf bekannte Art und Weise, beispielsweise durch ein Peltierelement, durch ein vergleichbares Heizelement mit ähnlichen Eigenschaften, durch den ohmschen Widerstand der Aktorteile **2** und **3**, durch einen PTC-Widerstand oder eine andere Heizstromquelle oder besonders vorteilhaft durch Mikrowellen oder Infrarot, wie in der DE 38 02 919 A1 beschrieben und hier nicht dargestellt, verformt sich das jeweils beheizte Aktorteil **2** bzw. **3** und zieht das nicht beheizte Aktorteil **2** bzw. **3** mit sich, wodurch das nicht fixierte Ende des Aktors **1** zur einen oder anderen Seite hin ausgelenkt wird, wie in Fig. 1b dargestellt. Erfindungsgemäß sind die Aktorteile **2** und **3** derart angeordnet, dass ihre Auslenkung beim Beheizen entgegen gesetzt gerichtet ist.

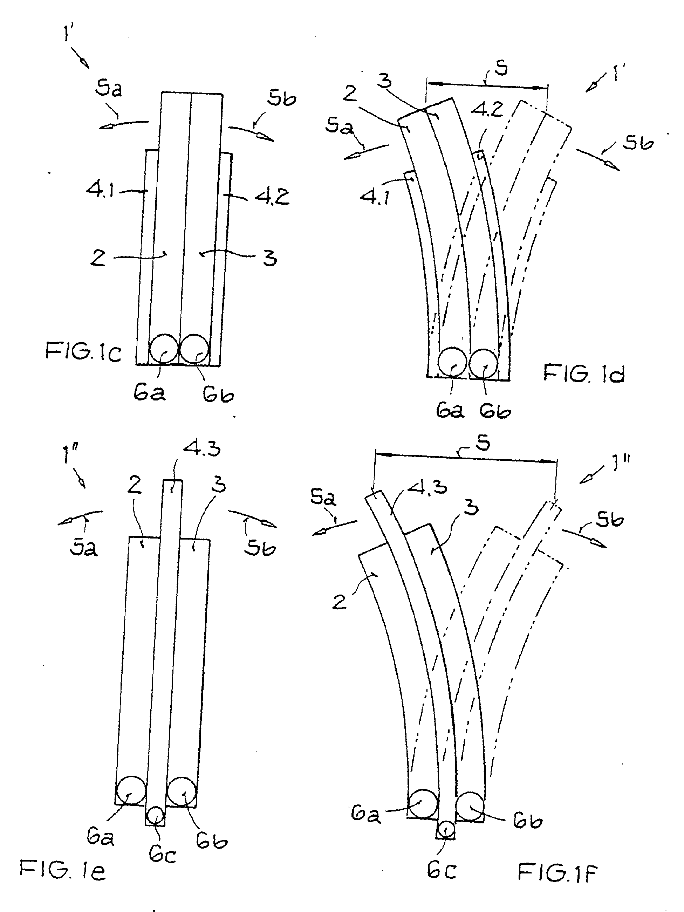

**Fig. 1c** und **Fig. 1d** zeigen einen zweiten erfindungsgemäßen Aktor (Stellelement) **1'** als Teil eines Stellantriebs, wobei Fig. 1c den Aktor **1'** in seiner Ausgangsstellung zeigt und Fig. 1d den Aktor **1'** in zwei ausgelenkten Stellungen. Der Aktor **1'** besteht in diesem Ausführungsbeispiel aus einem ersten Memory-Element **2** und einem zweiten Memory-Element **3**. Beide Memory-Elemente **2** und **3** sind auf geeignete Weise mit einander verbunden und bestehen vorteilhaft aus einer der genannten Legierungen.

Bei beiden Memory-Elementen **2** und **3** handelt es sich vorzugsweise um sogenannte Memorymetalle mit Einwegeffekt, was bedeutet, dass eine nach einer Erwärmung erfolgte Abkühlung keine weitere Formänderung bewirkt. Dies hat den Vorteil, dass die Wärmezufuhr nicht dauerhaft, sondern nur bei einer gewünschten Formänderung erfolgen muss. Jedes Memory-Element **2** bzw. **3** ist einzeln direkt oder indirekt, beispielsweise durch ein (nicht dargestelltes) Heizelement, beheizbar. Bei einer Erwärmung erfolgt bei den Memory-Elementen **2** und **3** innerhalb eines kleinen Temperaturintervalls eine nahezu sprungartige Formänderung, woraus sich für das nicht fixierte Ende des Aktors **1'** ein starker Hub ergibt, verbunden mit vergleichbar großem Arbeitsvermögen. Die Memory-Elemente **2** und **3** eigenen sich daher vorteilhaft zur schnellen Einstellung.

Desweiteren ist erfindungsgemäß mit jedem Memory-Element **2** bzw. **3** ein streifenförmiges Thermobimetall-Teil **4.1** bzw. **4.2** mit jeweils unidirektionalem Temperaturgang verbunden, wobei jedes Thermobimetall-Teil **4.1** bzw. **4.2** - ebenso wie die Memory-Elemente **2** bzw. **3** - einzeln direkt oder indirekt beheizbar ist. Der Vorteil der Thermobimetall-Teile **4.1** bzw. **4.2** besteht darin, dass aufgrund der linearen Temperatur-Weg-Abhängigkeit eine präzise Einstellung vorgenommen werden kann. Im Vergleich zu den Memory-Elementen **2** und **3** erfahren die Thermobimetall-Teile **4.1** und **4.2** bei Erwärmung einen weit geringeren Hub, weshalb sie sich hervorragend zur Feineinstellung eignen.

In den **Fig. 1e** bzw. **1f** ist ein dritter erfindungsgemäßer Aktor **1"** als Stellelement für einen Stellantrieb in Ausgangsstellung bzw. in ausgelenkter Stellung dargestellt. Im Gegensatz zum zweiten Aktor **1'** der Fig. 1c und 1d werden statt den beiden Thermobimetall-Teilen **4.1** und **4.2** ein einziges, aber dafür stärker dimensioniertes Thermobimetall-Teil **4.3** mit bidirektionalem Temperaturgang verwendet, das zwischen den beiden Memory-Elementen **2** und **3** angeordnet ist. Dabei ist das Thermobimetall-Teil **4.3** entweder an einem Ende durch eine eigene mechanische Verbindung **6c** fixiert, oder für die beiden Memory-Elemente **2** und **3** und das Thermobimetall-Teil **4.3** ist eine gemeinsame Fixierung **6** (Fig. 2) beispielsweise in Form einer Schraub- oder Nietverbindung vorgesehen.

Die Funktionsweise des Aktors **1"** ist ähnlich wie die des Aktors **1'**. Wird das Memory-Element **2** erwärmt, wird das nicht fixierte Ende des Aktors **1"** in Richtung des Pfeils **5a** ausgelenkt; wird das Memory-Element **3** erwärmt, wird das nicht fixierte Ende des Aktors **1"** in Richtung des Pfeils **5b** ausgelenkt. Das nicht fixierte Ende des Thermobimetall-Teils **4.3** mit bidirektionalem Temperaturgang bewegt sich bei Erwärmung entweder in Richtung des Pfeils **5a** oder in Richtung des Pfeils **5b,** je nachdem, wie es orientiert ist.

Somit wurde ein Aktor **1** bzw. **1'** bzw. **1"** geschaffen, dessen nicht fixiertes Ende sich bei Erwärmung des Aktorteils **2** in Richtung eines Pfeils **5a** und bei Erwärmung des Aktorteils **3** in Richtung eines Pfeils **5b** auslenkt und somit einen Dynamikbereich aufweist, der der Länge eines Pfeils 5 entspricht. Für das in Fig. 2 dargestellte Anwendungsbeispiel sind alle bisher beschriebenen Aktoren **1** bzw. **1'** bzw. **1"** prinzipiell gleich gut geeignet. Dem Fachmann steht es frei, je nach Anforderung den am besten geeigneten Aktor **1** bzw. **1'** bzw. **1"** einzusetzen.

**Fig. 2** zeigt eine Bildaufnahmeeinrichtung **16** mit einem optischen Sensor **7** und einer Optik **8**, wobei der optische Sensor **7** und die Optik **8** wesentliche Teile eines Bilderfassungssystems **9** darstellen. Als Bilderfassungssystem **9** wird ein passives Bilderfassungssystem wie CCD-Kamera, CMOS-Kamera, Infrarot-Kamera oder Wärmebildkamera, vorteilhaft jedoch ein aktives Bilderfassungssystem mit Sende- und Empfangsteil eingesetzt. Beim optischen Sensor **7** handelt es sich im Falle des aktiven Bilderfassungssystems vorzugsweise um einen aus der WO 99/60629 A1 bekannten PMD-Sensor (photonic mixer device), der ein Sendeteil **7.1** und ein Empfangsteil **7.2** aufweist und mit dem modulierte Strahlen **12a** elektromagnetischer bzw. optischer Natur mittels der Optik **8** auf ein Objekt **11** gerichtet werden.

Bei der Optik **8** handelt es sich in der Regel um ein Objektiv; beim Objekt **11** handelt es sich beispielsweise um einen Fahrzeuginsassen auf einem Fahrzeugsitz. Vom Objekt **11** reflektierte Strahlen **12b** gelangen wiederum durch das Objektiv **8** auf das Empfangsteil **7.2** des PMD-Sensors **7.** Statt des bevorzugt eingesetzten PMD-Sensors **7** als Teil des aktiven Bilderfassungssystems **9** können auch andere geeignete Bilderfassungssysteme, insbesondere aktive Bilderfassungssysteme, eingesetzt werden.

Die Optik **8** ist beispielsweise in einer geeigneten Halterung **15** gelagert und kann zusammen mit der Halterung **15** in parallel verlaufenden Gleitschienen **10a** und **10b** auf den PMD-Sensor **7** zu oder von ihm weg bewegt werden. Durch Verschieben der Optik **8,** zusammen mit der Halterung **15,** kann der Bildausschnitt in Richtung eines Pfeils **13** vergrößert oder verkleinert werden, um zum Beispiel die Schärfeeinstellung und/oder die Ausschnittsvergrößerung (Zoomfunktion) des Bilderfassungssystems **9** vorzunehmen. Zum Verschieben in den Gleitschienen **10a** und **10b** ist das Bilderfassungssystem **9** über ein Gelenk oder Getriebe **14** als der eine Teil eines Stellantriebs mit dem frei beweglichen Ende des Aktors **1** (oder **1'** oder **1"**) als dem anderen Teil des Stellantriebs verbunden; das andere Ende des Aktors **1** (oder **1'** oder **1"**) ist mittels der Befestigung **6** in geeigneter Weise fixiert, beispielsweise durch Verbinden mit dem Gehäuse der Bildaufnahmeeinrichtung **16**.

Wird ein Aktorteil **2, 3** (oder ein Thermobimetall-Teil **4.1, 4.2** oder **4.3**) des Aktors **1** (oder **1'** oder **1"**) auf geeignete und bereits beschriebene Art erwärmt, so schwenkt das nicht fixierte Ende des Aktors **1** (oder **1'** oder **1"**) in Richtung des Pfeils **5a** oder **5b** aus. Durch die zugeführte Wärme kann die Größe der Verschwenkung bzw. der zurück gelegte Weg des nicht fixierten Endes des Aktors **1** (oder **1'** oder **1")** genau bestimmt werden. Die Verschwenkung bzw. der zurück gelegte Weg des nicht fixierten Endes des Aktors **1** (oder **1'** oder **1"**) wird über das Gelenk oder Getriebe **14** übertragen und somit das Objektiv **8** in den Gleitschienen **10a** und **10b** verschoben. Durch den aus Aktor **1** (oder **1'** oder **1")** und Gelenk oder Getriebe **14** bestehenden Stellantrieb wird letztendlich die Schärfeeinstellung bzw. die Ausschnittsvergrößerung des Bilderfassungssystems **9** in Richtung des Pfeils **13** gezielt verändert.

Die Erfindung zeigt ein geräuschloses und kostengünstiges Stellelement (Aktor) aus einem Memorymetall, einem Thermobimetall oder aus einer Memorymetall-Thermobimetall-Kombination, das als Teil eines Stellantriebs beispielsweise zur schnellen und genauen Schärfeeinstellung bzw. Ausschnittsvergrößerung des Bilderfassungssystems einer Bildaufnahmeeinrichtungen für die Sitzbelegungserkennung in einem Fahrzeug geeignet ist.

## Patentansprüche

1. Stellelement (1), insbesondere als Teil eines Stellantriebs für ein Bilderfassungssystem (9) einer Bildaufnahmeeinrichtung (16), wobei sich die Einstellung des Bilderfassungssystems (9) auf ein Objekt (11) verändern lässt, **dadurch gekennzeichnet, dass** das Stellelement (1) aus einem Memory-Element (2) und einem Thermobimetall-Teil (3) besteht, wobei das Memory-Element (2) und das Thermobimetall-Teil (3) einzeln beheizbar sind, und dass die Auslenkung des Memory-Elements (2) und des Thermobimetall-Teils (3) beim Beheizen entgegen gesetzt gerichtet ist.

2. Stellelement (1) nach Anspruch 1, **dadurch gekennzeichnet, dass** das Stellelement (1) aus einem Memory-Element (2) mit Einweg-Effekt und einem Thermobimetall-Teil (3) besteht.

3. Stellelement (1) nach Anspruch 1, **dadurch gekennzeichnet, dass** das Stellelement (1) aus einem Memory-Element (2) mit Zweiweg-Effekt und einem Thermobimetall-Teil (3) besteht.

4. Stellelement (1) nach einem der Ansprüche 1 bis 3, **dadurch gekennzeichnet, dass** die beiden Memory-Elemente (2, 3) einseitig eingespannt sind.

5. Stellelement (1) nach einem der Ansprüche 1 bis 4, **dadurch gekennzeichnet, dass** die beiden Memory-Elemente (2, 3) mit einander verbundenen sind.

6. Stellelement (1), insbesondere als Teil eines Stellantriebs für ein Bilderfassungssystem (9) einer Bildaufnahmeeinrichtung (16), wobei sich die Einstellung des Bilderfassungssystems (9) auf ein Objekt (11) verändern lässt, **dadurch gekennzeichnet, dass** das Stellelement (1) aus zwei Thermobimetall-Teilen (2, 3) besteht, die einzeln beheizbar sind und dass die Auslenkung der Thermobimetall-Teile (2, 3) beim Beheizen entgegen gesetzt gerichtet ist.

7. Stellelement (1) nach Anspruch 6, **dadurch gekennzeichnet, dass** die beiden Thermobimetall-Teile (2, 3) einseitig eingespannt sind.

8. Stellelement (1) nach Anspruch 6 oder 7, **dadurch gekennzeichnet, dass** die beiden Thermobimetall-Teile (2, 3) mit einander verbundenen sind.

9. Stellelement (1), insbesondere als Teil eines Stellantriebs für ein Bilderfassungssystem (9) einer Bildaufnahmeeinrichtung (16), wobei sich die Einstellung des Bilderfassungssystems (9) auf ein Objekt (11) verändern lässt, **dadurch gekennzeichnet, dass** das Stellelement (1) aus einem Memory-Element (2) und einem Thermobimetall-Teil (3) besteht, wobei das Memory-Element (2) und das Thermobimetall-Teil (3) einzeln beheizbar sind, und dass die Auslenkung des Memory-Elements (2) und des Thermobimetall-Teils (3) beim Beheizen entgegen gesetzt gerichtet ist.

10. Stellelement (1) nach Anspruch 9, **dadurch gekennzeichnet, dass** das Memory-Element (2) und das Thermobimetall-Teil (3) einseitig eingespannt sind.

11. Stellelement (1) nach Anspruch 9 oder 10, **dadurch gekennzeichnet, dass** das Memory-Element (2) und das Thermobimetall-Teil (3) mit einander verbundenen sind.

12. Stellelement (1'; 1"), insbesondere als Teil eines Stellantriebs für ein Bilderfassungssystem (9) einer Bildaufnahmeeinrichtung (16), wobei sich die Einstellung des Bilderfassungssystems (9) auf ein Objekt (11) verändern lässt, **dadurch gekennzeichnet, dass** das Stellelement (1'; 1") aus zwei Memory-Elementen (2, 3) und wenigstens einem Thermobimetall-Teil (4.1, 4.2; 4.3) besteht, wobei die Memory-Elemente (2, 3) und das wenigstens eine Thermobimetall-Teil (4.1, 4.2; 4.3) einzeln beheizbar sind und dass die Auslenkung der Memory-Elemente (2, 3) beim Beheizen entgegen gesetzt gerichtet ist.

13. Stellelement (1'; 1") nach Anspruch 12, **dadurch gekennzeichnet, dass** die beiden Memory-Elemente (2, 3) und das wenigstens eine Thermobimetall-Teil (4.1, 4.2; 4.3) einseitig eingespannt sind.

14. Stellelement (1'; 1") nach Anspruch 12 oder 13, **dadurch gekennzeichnet, dass** das wenigstens eine Thermobimetall-Teil (4.1, 4.2; 4.3) mit den beiden Memory-Elementen (2, 3) verbundenen ist.

15. Stellelement (1'; 1") nach einem der Ansprüche 12 bis 14, **dadurch gekennzeichnet, dass** das wenigstens eine Thermobimetall-Teil (4.1, 4.2; 4.3) einen bidirektionalen Temperaturgang aufweist.

16. Stellelement (1'; 1") nach einem der Ansprüche 12 bis 14, **dadurch gekennzeichnet, dass** das wenigstens eine Thermobimetall-Teil (4.1, 4.2; 4.3) einen unidirektionalen Temperaturgang aufweist.
